# EUROPÄISCHE PATENTANMELDUNG

(11) **EP 1 657 471 A2**
(43) Veröffentlichungstag der Anmeldung: **17.05.2006**
(21) Anmeldenummer: 05024589.3
(22) Anmeldetag: 10.11.2005
(51) Int. Cl.: F16F 15/027, B60G 17/015, B60N 2/52

(54) **Verfahren zur Dämpfung der Schwingungen in einem Federsystem sowie Federsystem**

(30) Priorität: 10.11.2004 DE 102004054325
(71) Anmelder: Isringhausen GmbH & Co. KG, 32657 Lemgo (DE)
(72) Erfinder: Meyer, Lutz, 32689 Kalletal (DE); Meyer, Henning, 32689 Kalletal (DE); Maciejewski, Igor Marek, 75-256 Koszalin (PL)
(74) Vertreter: DTS München

(57) **Zusammenfassung**

Die Erfindung betrifft ein Verfahren zur Dämpfung der Schwingungen in einem Federsystem mit einem mit einer Masse 2 beaufschlagten schwingenden Teil 1 und einem feststehenden Teil 3, wobei die Beschleunigung des schwingenden Teils 1 über einen Beschleunigungssensor 5 gemessen wird und der Relativweg zwischen dem schwingenden Teil 1 und dem feststehenden Teil 3 über einem Ortssensor 7 gemessen wird sowie einer Luftfeder 4, die zwischen dem schwingenden Teil 1 und dem feststehenden Teil 3 angeordnet ist, deren Luftdruck in Abhängigkeit der gemessenen Beschleunigung und des gemessenen Relativwegs über ein Steuerventil 11 gesteuert wird, so dass sowohl die Beschleunigung als auch der Relativweg jeweils einen Minimalwert aufweisen.

Darüber hinaus betrifft die Erfindung ein Federsystem, mit dem das erfindungsgemäße Verfahren durchgeführt werden kann.

## Beschreibung

Die Erfindung befasst sich mit einem Verfahren zur Dämpfung der Schwingungen in einem Federsystem sowie einem Federsystem mit einem massenbeaufschlagten schwingenden Teil, einem feststehenden Teil und einer dazwischen angeordneten Luftfeder.

Federsysteme werden beispielsweise in Fahrzeugsitzen in Form von Scherenlenker-Schwingsystemen eingesetzt. Hierbei ist ein feststehender Teil, der mit dem Fahrzeug verbunden ist, mit einem schwingenden Teil, der mit der Sitzfläche verbunden ist, verbunden. Wird die Sitzfläche mit einer Masse, nämlich einer Person, belastet, ergeben sich Schwingungen im Fahrbetrieb, die möglichst verhindert werden sollen, damit der Komfort für die Person erhöht wird. Es treten Schwingungen in unterschiedlichen Frequenzbereichen auf. Grundsätzlich kann man Schwingungen aus dem höheren Frequenzbereich von ca. 4 bis 10 Hz von den Schwingungen im niedrigen Frequenzbereich von ca. 1 bis 3 Hz unterscheiden. Gemäß ISO 2631 ist die Wirkung von Beschleunigungen im höheren genannten Frequenzbereich von größerem schädigendem Einfluss auf den sitzenden Menschen. Um diese Beschleunigungen zu reduzieren, wird regelmäßig ein Stoßdämpfer mit relativ geringen Dämpfungskräften eingesetzt. Um demgegenüber die Amplituden der Schwingungen im niedrigen Frequenzbereich ausreichend zu dämpfen, sind höhere Dämpfungskräfte erforderlich. Folglich wirkt sich ein für den höheren Frequenzbereich ausgewählter Dämpfer mit relativ niedrigen Kräften im unteren Frequenzbereich negativ aus, da große Amplituden des Schwingsystems zu Endanschlägen führen bzw. die Kontrolle des Fahrzeuges oder der Maschine erschweren.

Die bislang gefundenen Kompromisslösungen umfassen zum einen einstellbare Stoßdämpfer, die es dem Fahrer ermöglichen, auf die jeweilige Fahr- und Arbeitssituation die Dämpfungskräfte einzustellen. Allerdings erkennt der Fahrer nicht immer die optimale Einstellung, so dass bei weichen Einstellungen und vereinzelt starken Stößen ein Durchschlagen des Sitzes erfolgt.

Dagegen können gefederte Sitze mit semiaktiver Dämpfung, beispielsweise magneto-rheologische Dämpfer im Echtzeitbetrieb die Dämpfungskräfte verstellen. Da Schwingungen in der Praxis allerdings unterschiedliche, sich überlagernde Frequenzanteile haben, ist diese Lösung immer noch nicht ausreichend.

Es wurden deswegen auch Sitze mit Luftdämpfung vorgeschlagen, die hochfrequente Schwingungen gut isolieren, da keine geschwindigkeitsabhängige Kraftkomponente wie bei hydraulischen Stoßdämpfern gegeben ist. Dadurch lassen sich auch Resonanzschwingungen in gewissem Umfang verringern. Allerdings ist insbesondere bei Schwingsystemen mit integrierter Höheneinstellung und starker Anregung die oben schon erwähnte sehr starke Relativbewegung zwischen feststehendem Teil und schwingendem Teil vorhanden.

Als weitere Fortentwicklung wurden auch aktiv-hydraulische Sitze vorgeschlagen. Diese versuchen, den schwingenden Teil des Sitzes auf seiner Höhenlage zu halten, indem den eingeleiteten Bewegungen entgegengesteuert wird. Dadurch werden die an der Sitzfläche auftretenden Beschleunigungen reduziert. Allerdings hat auch diese Lösung ihre Grenzen im begrenzten Schwingweg, da Endanschläge vermieden werden müssen. Außerdem zieht die Verwendung hydraulischer Energie hohe Kosten nach sich und solche Systeme sind anfällig für Leckagen. Des Weiteren sind bei einer starken Ruhigstellung des schwingenden Teils alle Bewegungen des Fahrzeugbodens Relativbewegungen, die durch die Knie des Fahrers aufgenommen werden müssen.

Aufgabe der Erfindung ist es deswegen, ein Verfahren zur Dämpfung der Schwingungen in einem Federsystem sowie ein Federsystem vorzustellen, welches im niedrigen Frequenzbereich nur geringe Amplituden zulässt und im hohen Frequenzbereich die Beschleunigungen reduziert.

Die Aufgabe wird durch ein Verfahren gemäß den Merkmalen des Patentanspruchs 1 gelöst. Dadurch, dass sowohl die Beschleunigung des schwingenden Teils als auch der Relativweg zwischen schwingendem Teil und feststehendem Teil gemessen wird und der Luftdruck der Luftfeder in Abhängigkeit dieser Werte gesteuert wird, weisen sowohl die Beschleunigung als auch der Relativweg jeweils einen Minimalwert auf. Somit treten weder so große Relativbewegungen auf, dass die Endanschläge erreicht werden bzw. die Kontrolle des Fahrzeuges oder der Maschine beeinträchtigt wird, noch schädigende Beschleunigungen. Darüber hinaus ist das erfindungsgemäße Verfahren mit einer Luftfeder bedeutend preiswerter als hydraulische Systeme, und auch nicht anfällig gegen Leckage - zumindest erfolgt keine Verschmutzung bei einer Leckage.

Eine vorteilhafte Weiterbildung der Erfindung sieht vor, dass die Eingangsgrößen der Beschleunigung und des Relativweges mechanisch oder elektrisch erfasst werden. Dadurch können sehr preiswerte und zuverlässige Sensoren verwendet werden.

Eine weitere vorteilhafte Weiterbildung der Erfindung sieht vor, dass die Eingangsgrößen direkt erfasst werden. Dadurch muss keine Umrechung der ermittelten Eingangsgrößen für die Steuerung des Luftdrucks der Luftfeder vorgenommen werden.

Eine weitere vorteilhafte Weiterbildung der Erfindung sieht vor, dass der Luftverbrauch über die Abstimmung eines Reglers beeinflusst wird. Damit lässt sich das System bei der Auslegung und beim Betrieb auf die zur Verfügung stehende Luftversorgung anpassen.

Eine weitere vorteilhafte Weiterbildung der Erfindung sieht vor, dass gleichzeitig ein zweites, aus dem Stand der Technik bekanntes Verfahren zur Dämpfung - beispielsweise in Form eines konventionellen ölhydraulischen Stoßdämpfers, eines Luftstoßdämpfers, eines semiaktiven Stoßdämpfers oder einer aktiv-hydraulischen Einrichtung zur Stoßdämpfung - mitläuft. Dadurch ist eine größere Zuverlässigkeit des Verfahrens gewährleistet.
Eine weitere vorteilhafte Weiterbildung der Erfindung sieht vor, dass das zweite Verfahren nur zugeschaltet wird, wenn das erfindungsgemäße Verfahren ausfällt. Dadurch wird beim Ausfall des erfindungsgemäßen Verfahrens verhindert, dass schlagartig überhaupt keine Dämpfung mehr vorhanden ist.

Des Weiteren wird die Aufgabe durch ein Federsystem mit den Merkmalen des Patentanspruchs 7 gelöst. Mit einem solchen Federsystem kann das erfindungsgemäße Verfahren durchgeführt werden, so dass alle oben hierzu genannten Vorteile auch durch das erfindungsgemäße Federsystem realisiert werden.

Eine vorteilhafte Weiterbildung der Erfindung sieht vor, dass zwischen dem schwingenden Teil und dem feststehenden Teil ein weiteres Dämpfungssystem angeordnet ist, insbesondere ein konventioneller ölhydraulischer Stoßdämpfer, eine semiaktiver Stoßdämpfer oder eine aktiv-hydraulische Einrichtung zur Stoßdämpfung. Hierdurch wird insbesondere im Falle des Ausfalles der erfindungsgemäßen Luftfederung weiterhin eine Dämpfung des Federsystems erreicht.

Die Erfindung ist insbesondere bei einem Fahrzeugsitz, der vorzugsweise mit einem Scherenlenker-Schwingsystem ausgestattet ist, oder einem Fahrwerk eines Straßen- oder Schienenfahrzeugs besonders gut einsetzbar.

Eine vorteilhafte Weiterbildung der Erfindung sieht vor, dass am schwingenden Teil des Fahrzeugsitzes eine Fußstütze angebracht ist. Dadurch wird eine Relativbewegung zwischen den Füßen eines Insassen und seinem Oberkörper verhindert, so dass seine Knie nicht belastet werden.

Eine weitere vorteilhafte Weiterbildung der Erfindung sieht vor, dass an der Fußstütze Pedale zur Steuerung eines Fahrzeugs angebracht sind. Dadurch ist es einem Fahrer eines Fahrzeugs möglich, dieses zu führen, ohne dass er in direktem Kontakt mit dem Kabinenboden sein muss. Somit werden seine Knie entlastet.

Vorteilhafte Ausgestaltungen der Erfindung werden anhand der in den Figuren dargestellten Ausführungsbeispiele näher erläutert. Hierbei zeigen:
- Fig. 1: eine schematische Darstellung eines erfindungsgemäßen Fahrzeugsitzes und
- Fig. 2: eine schematische Darstellung eines erfindungsgemäßen Fahrwerks eines Schienenfahrzeugs.

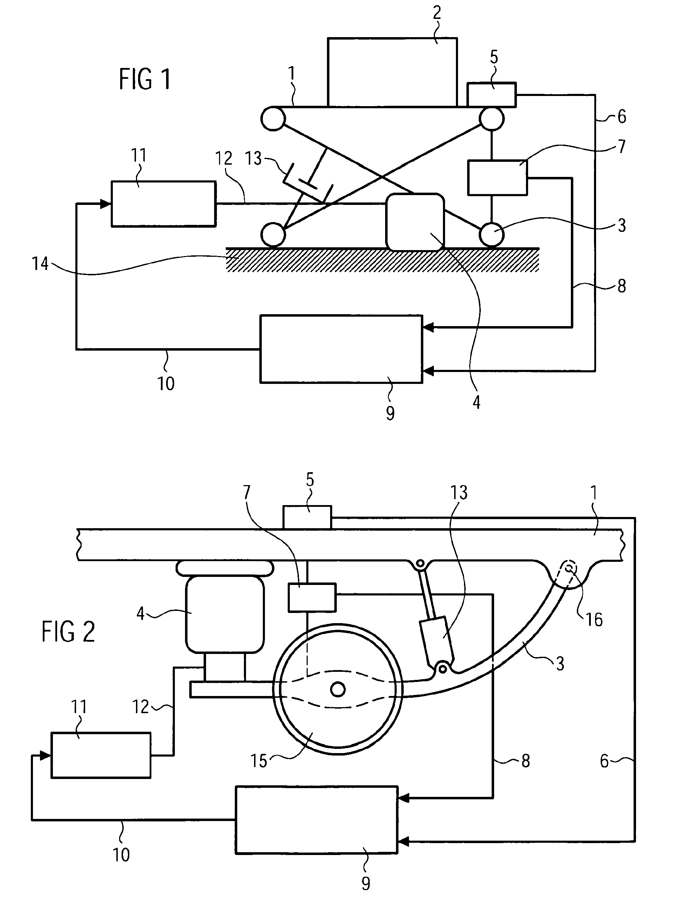

Das in Fig. 1 dargestellte erfindungsgemäße Federsystem stellt schematisch einen Fahrzeugsitz dar, der in einer Fahrerkabine angeordnet ist und auf dem ein Insasse sitzt. Es handelt sich hierbei um ein vom Prinzip her bekanntes Scherenlenker-Schwingsystem, das im Folgenden deswegen nur soweit erläutert wird, wie es im Rahmen der vorliegenden Erfindung nötig ist. Die prinzipielle Ausgestaltung ist dem Fachmann hinreichend bekannt.

Der Fahrzeugsitz ist mit einem feststehenden Teil 3 auf einem Kabinenboden 14 innerhalb der Fahrerkabine eines Fahrzeug angeordnet. Ein schwingender Teil 1 wird durch eine Sitzfläche verkörpert. Auf der Sitzfläche sitzt eine Person, die durch eine Masse 2 dargestellt ist. Ein solches massebelastetes Federsystem bewegt sich mit dem Kabinenboden 14 und überträgt die Bewegungen des Fahrzeugs, beispielsweise beim Durchfahren eines Schlaglochs, auf die Masse 2. Das Federsystem schwingt dabei mit verschiedenen Frequenzen, die sich überlagern. Insbesondere im höherfrequenten Bereich zwischen 4 und 10 Hz sind auftretende Beschleunigungen für die Person auf dem Fahrzeugsitz schädlich. Um diesen, den Menschen am stärksten schädigenden Frequenzbereich zu isolieren, weist das Federsystem nur einen schwachen Stoßdämpfer 13 auf. Genauso ist es erfindungsgemäß möglich, dass auch gar kein Stoßdämpfer 13 vorhanden ist. Der Stoßdämpfer 13 ist zwischen dem feststehenden Teil 3 und dem schwingenden Teil 1 angeordnet.

Darüber hinaus ist zwischen dem schwingenden Teil 1 und dem feststehenden Teil 3 eine Luftfeder 4 angeordnet, deren Härte mittels Druckluft eingestellt werden kann, die von einem Steuerventil 11 über Druckleitungen 12 in die Luftfeder 4 gelangen bzw. die Luft aus der Luftfeder 4 entweichen lassen. Das Steuerventil 11 wird über ein Steuersignal 10, das von einem Kontrollsystem 9 erzeugt wird, gesteuert und gibt damit Luft in die Luftfeder 4 oder entzieht der Luftfeder 4 Luft, so dass deren Härte eingestellt wird.

Zur erfindungsgemäßen Dämpfung des Federsystems verarbeitet das Kontrollsystem 9 ein Relativwegsignal 8, das von einem Ortssensor 7 erzeugt wird, und ein Beschleunigungssignal 6, das von einem Beschleunigungssensor erzeugt wird. Der Beschleunigungssensor 5 misst dabei die Beschleunigung des schwingenden Teils 1, also der Sitzfläche, auf der sich die Masse 2, also die Person, befindet. Der Ortssensor 7 misst den Relativweg zwischen dem schwingenden Teil 1 und dem feststehenden Teil 3. Als Beschleunigungssensor 5 bzw. als Ortssensor 7 sind alle bekannten Beschleunigungssensoren bzw. Ortssensoren geeignet, sowohl solche, die die Beschleunigung bzw. den Relativweg direkt messen, als auch solche, die diese indirekt messen. Da diese Beschleunigungssensoren 5 und Ortssensoren 7 dem Fachmann bekannt sind und ihre Funktionsweise nicht erfindungswesentlich ist, wird im Folgenden nicht näher darauf eingegangen, wie sie funktionieren.

Mit Hilfe der erfassten Eingangsgrößen, nämlich des Beschleunigungssignals 6 und des Relativwegsignals 8, die dem Kontrollsystem 9 zur Verfügung gestellt werden, errechnet dieses die momentan optimale Härte der Luftfeder 4 und gibt das entsprechende Steuersignal 10 an das Steuerventil 11, das dann entweder ein Auf- oder Abblasventil aktiv ansteuert. Dadurch wird der Luftfeder 4 Luft zugeführt, wenn diese härter werden soll und Luft abgeblasen, wenn diese weicher werden soll. Mittels einer solchen Regeleinheit wird der Tendenz, im niedrigeren Frequenzbereich zwischen 1 und 3 Hz größere Schwingwege zu fahren, wie dies oben zum Stand der Technik bezüglich der Luftdämpfung ausgeführt wurde, gegengesteuert. Anders als die aktiven Systeme aus dem Stand der Technik mit aktiv-hydraulischen Verfahren wird die Relativbewegung zwischen schwingendem Teil 1 und feststehendem Teil 3 des Fahrzeugsitzes im niedrigen Frequenzbereich bei großen Amplituden der Bewegung des Fahrzeugbodens reduziert, wobei gleichzeitig eine Isolierung der höherfrequenten Beschleunigungen stattfindet. Damit wird eine deutliche Reduzierung der auf den Menschen, hier als Masse 2 dargestellt, einwirkenden Schwingungen im gesamten Frequenzbereich, jedoch insbesondere in dem Bereich oberhalb von 4 Hz erzielt.

Die Vorteile dieser Lösung gegenüber dem aktiv-hydraulischen Schwingsystem sind, dass niedrigere Kosten als für die Hydraulik entstehen und bei einer Leckage kein Öl die Fahrerkabine verschmutzt, sondern lediglich Druckluft austritt. Au-βerdem werden die Relativbewegungen zwischen dem Kabinenboden 14 und dem schwingenden Teil 1 des Sitzes reduziert. Durch die reduzierte Relativbewegung wird auch die Fahrsicherheit erhöht, insbesondere bei großen Amplituden der Bewegung des Fahrzeugbodens.

Aus Sicherheitsgründen kann das erfindungsgemäße System auch zusätzlich mit einer konventionellen Niveauregulierung ausgestattet werden, die von der Mechanik her ständig mitläuft oder aber bei einem Spannungsabfall des erfindungsgemäßen Federsystems zugeschaltet wird. Pneumatisch kann dabei das Umschalten von aktiver auf konventionelle Regelung durch Ventile realisiert werden, die im spannungslosen Zustand die konventionelle Regelung einschalten und die aktiven Ventile abschalten.

In Fig. 2 ist ein weiteres Ausführungsbeispiel des erfindungsgemäßen Federsystems dargestellt. Es handelt sich hierbei um ein Fahrwerk eines Schienenfahrzeugs. Der prinzipielle Aufbau entspricht im Wesentlichen dem des Ausführungsbeispiels der Fig. 1, so dass im Folgenden überwiegend auf die Unterschiede eingegangen wird. Gleiche oder gleichwirkende Teile sind mit den gleichen Bezugszeichen bezeichnet. Anstatt eines Scherenlenker-Schwingsystems ist der feststehende Teil 3 als einarmiger Hebel ausgebildet, der über eine Drehachse 16 mit dem schwingenden Teil 1 verbunden ist. Die Luftfeder 4 ist an dem der Drehachse 16 entgegenliegenden Ende des Hebels angeordnet. Der feststehende Teil 3 weist ein Rad 15 auf, das auf einer nicht gezeigten Schiene läuft. Die Masse 2 ist nicht dargestellt, da sie direkt mit dem schwingenden Teil 1 in Form eines Eisenbahnwagons verbunden ist.

Das Regelungsverfahren zur Dämpfung der Schwingungen zwischen dem schwingenden Teil 1 und dem feststehenden Teil 3 erfolgt analog zu dem in Fig. 1 beschriebenen Verfahren. Es werden auch hier mittels eines Beschleunigungssensors 5 die Beschleunigung und mittels eines Ortssensors 7 die Relativbewegung zwischen schwingendem Teil 1 und feststehendem Teil 3 gemessen. Das dadurch erhaltene Beschleunigungssignal 6 und das Relativwegsignal 8 werden an das Kontrollsystem 9 gegeben, wo die Berechnung stattfindet, welcher Druck zu diesem Zeitpunkt optimal für die Luftfeder 4 ist. Das dann erzeugte Steuersignal 10 steuert das Steuerventil 11, welches über Druckleitungen 12 entweder ein Abblasen oder ein Aufblasen der Luftfeder 4 bewirkt. Hierbei werden die selben Vorteile erreicht, wie in dem in Fig. 1 beschriebenen ersten Ausführungsbeispiel. Auch hier ist wieder ein Stoßdämpfer 13 eingesetzt, der für ein "Fail-Save-Verhalten" äußerst sinnvoll ist.

### Bezugszeichenliste

- 1: schwingender Teil
- 2: Masse
- 3: feststehender Teil
- 4: Luftfeder
- 5: Beschleunigungssensor
- 6: Beschleunigungssignal
- 7: Ortssensor
- 8: Relativwegsignal
- 9: Kontrollsystem
- 10: Steuersignal
- 11: Steuerventil
- 12: Druckleitung
- 13: Stoßdämpfer
- 14: Kabinenboden
- 15: Rad
- 16: Drehachse

## Patentansprüche

1. Verfahren zur Dämpfung der Schwingungen in einem Federsystem mit einem mit einer Masse (2) beaufschlagten schwingenden Teil (1) und einem feststehenden Teil (3),
wobei die Beschleunigung des schwingenden Teils (1) über einen Beschleunigungssensor (5) gemessen wird und der Relativweg zwischen dem schwingenden Teil (1) und dem feststehenden Teil (3) über einen Ortssensor (7) gemessen wird
sowie einer Luftfeder (4), die zwischen dem schwingenden Teil (1) und dem feststehenden Teil (3) angeordnet ist, deren Luftdruck in Abhängigkeit der gemessenen Beschleunigung und des gemessenen Relativwegs über ein Steuerventil (11) gesteuert wird,
so dass sowohl die Beschleunigung als auch der Relativweg jeweils einen Minimalwert aufweisen.

2. Verfahren nach Anspruch 1, **dadurch gekennzeichnet, dass** die Eingangsgrößen der Beschleunigung und des Relativwegs mechanisch oder elektrisch erfasst werden.

3. Verfahren nach einem der Ansprüche 1 bis 2, **dadurch gekennzeichnet, dass** die Eingangsgrößen direkt erfasst werden.

4. Verfahren nach einem der Ansprüche 1 bis 3, **dadurch gekennzeichnet, dass** der Luftverbrauch über die Abstimmung eines Reglers beeinflusst wird.

5. Verfahren nach einem der Ansprüche 1 bis 4, **dadurch gekennzeichnet, dass** gleichzeitig ein zweites Verfahren zur Dämpfung in Form eines konventionellen ölhydraulischen Stoßdämpfers (13), eines Luft-Stoßdämpfers, eines semiaktiven Stoßdämpfers oder einer aktiv-hydraulischen Einrichtung zur Stoßdämpfung mitläuft.

6. Verfahren nach Anspruch 5, **dadurch gekennzeichnet, dass** das zweite Verfahren nur zugeschaltet wird, wenn das erfindungsgemäße Verfahren ausfällt.

7. Federsystem mit Dämpfungseigenschaften mit einem mit einer Masse (2) beaufschlagten schwingenden Teil (1), einem feststehenden Teil (3) und einer dazwischen angeordneten Luftfeder (4), die mit einem Steuerventil (11) über Druckleitungen (12) verbunden ist, wobei das Steuerventil (11) mit einem es steuernden Kontrollsystem (9) über eine elektrische Leitung verbunden ist und dass Kontrollsystem (9) über jeweils eine elektrische Leitung mit einem Beschleunigungssensor (5) zur Messung der Beschleunigung des schwingenden Teils (1) und damit einen Ortssensor (7) zur Messung des Relativwegs zwischen schwingendem Teil (1) und feststehendem Teil (3) verbunden ist.

8. Federsystem nach Anspruch 7, **dadurch gekennzeichnet, dass** zwischen dem schwingenden Teil (1) und dem feststehenden Teil (3) ein Dämpfungssystem, insbesondere ein konventioneller ölhydraulischer Stoßdämpfer (13), ein Luft-Stoßdämpfer, ein semiaktiver Stoßdämpfer oder eine aktiv-hydraulische Einrichtung zur Stoßdämpfung, angeordnet ist.
